# EUROPEAN PATENT SPECIFICATION

(11) **EP 2 315 732 B1**
(45) Date of publication and mention of the grant of the patent: **26.11.2014**
(21) Application number: 09770828.3
(22) Date of filing: 22.06.2009
(51) Int. Cl.: C04B 35/185, C04B 38/00, C04B 38/06

(54) **METHOD FOR MAKING POROUS ACICULAR MULLITE BODIES**
VERFAHREN ZUR HERSTELLUNG VON KÖRPERN AUS PORÖSEM, NADELFÖRMIGEM MULLIT
PROCÉDÉ DE FABRICATION DE CORPS DE MULLITE ACICULAIRE POREUX

(30) Priority: 27.06.2008 US 76306 P
(43) Date of publication of application: 04.05.2011
(73) Proprietor: Dow Global Technologies LLC, Midland, MI 48674 (US)
(72) Inventor: HAN, Chan, Midland MI 48642 (US); ZIEBARTH, Robin, Paul, Midland MI 48642 (US); PYZIK, Aleksander, Josef, Midland MI 48642 (US)
(74) Representative: Beck Greener
(86) International application number: PCT/US2009/048081
(87) International publication number: WO 2009/158294

(56) References cited:
- WO-A-01/16050
- WO-A-92/11219
- WO-A-03/082773
- WO-A-2004/096729
- US-A1- 2005 115 214
- US-A1- 2007 203 315

## Description

This invention relates to methods for making porous acicular mullite bodies.

Acicular mullite takes the form of high aspect ratio needles. Masses of these elongated needles form highly porous structures which are characterized by their excellent temperature resistance. Porous acicular mullite bodies can be used as particulate traps to filter soot from the exhaust emitted from power plants. The power plant may be mobile or stationary. An example of a mobile power plant is an internal combustion engine. Stationary power plants include electricity and/or steam generating units. The porous acicular mullite bodies are also useful as catalyst supports, such as supports for catalytic metals in automotive catalytic converters. Porous acicular mullite bodies loaded with certain catalysts can perform multiple functions, such as acting as a mechanical soot filter and also as a catalytic converter to reduce NOx emissions and oxidize residual hydrocarbon values and carbon monoxide that are contained in combustion exhaust gases.

Porous acicular mullite bodies can also be used as filters or as supports for catalysts in other types of chemical reactions, or as supports for sorbents such as TiO₂ for arsenic abatement.

A convenient way of manufacturing porous acicular mullite bodies starts with a "green body" that contains a source of aluminum and silicon atoms. The green body is fashioned into the approximate size and shape that is wanted in the final product. The binder is burnt out and the green body is calcined. By heating the green body in the presence of a fluorine source, a fluorotopaz compound having the (theoretical) empirical formula Al₂(SiO₄)F₂ can be formed. The fluorotopaz compound then can be thermally decomposed to form mullite, which has the (theoretical) empirical structure 3Al₂O₃·2SiO₂. The mullite crystals formed this way take the form of a mass of interconnected needles. The needles usually have an average diameter of up to about 25 microns. The interconnected needles form a porous structure. The size and shape of the product is very close to that of the starting green body.

See, for example, WO01/16050.

The porosity of these acicular mullite bodies is very important. Many uses of mullite bodies require a gas or liquid to flow through the body. Higher porositics reduce the operating pressures that are needed to establish a given fluid flow rate through the body. In cases in which the mullite body serves as a carrier for some functional material such as a catalyst or sorbent, a higher porosity tends to increase the carrying capacity of the body, which allows more of the functional material to be loaded onto the body.

However, the size of the pores is also important. If the pore size becomes too large, the mullite body becomes less efficient as a filter. In catalyst or sorbent applications, large pores create the possibility that reagents flowing through the body will not make contact with the catalyst or sorbent. In addition, the mechanical integrity of the body often is reduced as the pore size becomes larger. Good mechanical integrity is obviously important so that the body can withstand the mechanical and thermal stresses that it experiences during normal handling and use. As a practical matter, mullite bodies (as well as other ceramic bodies) that have porosities greater than 60% tend to have unacceptably large pores, which results in loss of filtration efficiency and physical strength. It is generally desirable to maintain average pore sizes at 50 microns or smaller.

Acicular mullite bodies have been produced at porosities of as much as about 80% by using lightly compressed dry powders to form the green body. Light pressing methods permit the green body to be formed at low densities, which leads to high porosity once the green body is converted to mullite. The problem with light pressing methods is that they can only be used to make parts having very simple geometries. In addition, pressing methods generally only work for relatively small parts. Most acicular mullite parts are required to have somewhat complex geometries, and these parts can be somewhat large. Higher pressure pressing methods can produce mullite bodies with porosities in the range of from 50 to 70 volume percent, but again, these methods are limited to making smaller bodies with simple geometries.

Large green bodies, and those having these more complex geometries, must be produced using wet methods rather than simple pressing methods. Extrusion and injection molding processes are commonly used in these cases, although slip casting and tape casting are also useful. The wet methods cannot produce green bodies at very low densities, and as a result, the porosity of the resulting acicular mullite seldom exceeds about 60 volume percent.

Porogens are used in some ceramic systems to produce porous bodies. However, the nature of the mullitization process discourages the use of porogens. Mullite production is a multi-step process in which the green body is formed and the binders burnt out. The body at this stage of the process is extremely weak and difficult to handle. The addition of a porogen into a green body only further weakens the structure, and can in addition introduce cracking or other defects. With other ceramic materials, this problem is ameliorated somewhat by calcining the body before handling it. Calcining permits bridges to form between adjacent ceramic grains, and these bridges strengthen the structure enough to allow it to be handled more easily. However, mullite presents a unique challenge, in that in prior processes, calcination at temperatures greater than about 1100°C adversely affect the ability to grow high aspect ratio crystals during the subsequent mullitization steps. Calcination at lower temperatures does not provide significant strengthening of the body.

Therefore, the problem remains to achieve high porosity in larger, more complex acicular mullite bodies, and to achieve high porosity starting from a green body that is produced by a wet method. The body also needs to be formed with minimal cracks or other defects, and, prior to the mullitization process, needs to have sufficient mechanical strength that it can be handled easily. In addition, such a highly porous body should have small pores, good mechanical strength after mullitization, and, for many end-use applications, good resistance to thermal shocks that are caused by rapid changes in temperature.

This invention is in one aspect a method for making an acicular mullite body. The method comprises;
a) forming a cohesive mass from components that include a source of aluminum atoms and a source of silicon atoms, from 5 to 60 weight percent, based on all components except liquid(s) and binder(s), of porogen particles having a volume average effective particle size of from 1 to 50 microns, at least one liquid and optionally a binder; then
b) shaping the cohesive mass into a green body;
c) heating the green body, under an atmosphere that is substantially devoid of a fluorine-containing gas, to a temperature sufficient to sequentially remove the binder, if present, and then convert the porogen particles to a gas and create a porous green body, then
d) calcining the porous green body, under an atmosphere that is substantially devoid of a fluorine-containing gas, at a temperature of between 1100°C and 1400°C to form a porous calcined body; and then
e) heating the porous calcined body in the presence of an atmosphere that contains a fluorine-containing compound, to a temperature such that the source of aluminum atoms and the source of silicon atoms in the calcined body react with the fluorine-containing compound to form fluorotopaz, and then
f) heating the body to a temperature above 800°C to decompose the fluorotopaz to form a porous acicular mullite body.

This method is useful for making porous acicular mullite bodies that have very high porosities and small pore sizes. Average pore sizes are typically below 50 microns, and can be as small as 1 micron. The average pore size is preferably from 5 to 40 microns and more preferably from 10 to 25 microns, but pore sizes can be varied to some extent by using porogens of different sizes. In addition, the process produces bodies with very little cracking or other defects.

A very surprising feature of the invention is that the green body can be calcined at high temperatures without destroying the ability of the mullite precursors to form high aspect ratio needles. This is contrary to earlier observations in mullite systems. The ability to calcine the body permits the body to acquire greater fracture strength. The fracture strength is typically 3 MPa or higher even at a porosity of from 70 to 85%, as measured by the ASTM 1161 4-point bend test. The fracture strength of the calcined body is sometimes referred to herein as the "calcination strength". The good calcination strength permits the calcined part to be easily handled.

The acicular mullite body produced in the invention also has good fracture strength, which is often 10 MPa, as measured by the ASTM 1161 4-point bend test, even at porosities of from 70 to 85%.

The method of the invention is especially useful for making large bodies (such as those having a volume, as defined by its outer dimensions, of at least 13.5 cubic inches (220 cm³), preferably at least 96 cubic inches (1575 cm³) and more preferably at least 216 cubic inches (3540 cm³)), and/or bodies that have complex geometries, such as honeycombs.

In another aspect, this invention is a porous mullite precursor calcined body having a porosity of from 70 to 85% porosity and which has a calcination strength of at least 3 MPa preparable by steps (a) to (d) of the method of the invention.

In another aspect, this invention is a porous acicular mullite body having a porosity of at least 70 volume percent; a volume average pore size of no greater than 50 microns, and a fracture strength of at least 10 MPa.

In yet another aspect, this invention is an acicular mullite carrier coated with a catalyst or a sorbent, comprising at least one catalytically active material or sorbent deposited on a porous acicular mullite body that, prior to the deposition of the catalytically active material, has a porosity of at least 70 volume percent; an average pore size of no greater than 50 microns, and a fracture strength of at least 10 MPa.

The green body is composed of at least in part of a source of aluminum atoms and a source of silicon atoms. Suitable sources of aluminum atoms and silicon atoms include materials such as described in WO 92/11219, WO 03//082773 and WO 04/096729. A single material may act as a source of both aluminum atoms and silicon atoms. Examples of suitable precursor materials include various hydrated aluminum silicates such as clay as well as alumina, silica, aluminum trifluoride, various zeolites and even mullite itself. The green body may contain, for example, a mixture of an aluminum silicate clay and alumina. Alternatively, the green body may contain a mixture of aluminum trifluoride, silicon dioxide and optionally alumina.

The green body should contain aluminum and silicon atoms in a mole ratio of from 1 to about 4 aluminum atoms per mole of silicon atoms. The theoretical composition of mullite contains aluminum atoms and silicon atoms in a 3:1 ratio, the empirical formula being 3Al₂O₃ -2SiO₂. However, mullite crystals can form at different aluminum to silicon ratios. As described in WO 03/082773, the ratio of aluminum atoms to silicon atoms in the green body may be from 2 to 2.95. Alternatively, the ratio of aluminum to silicon atoms may be from 2 to 4 or from 2.5 to 3.5.

The sources of aluminum atoms and silicon atoms suitably constitute from 55 to about 95 weight percent of the green body, exclusive of the porogen particles and any binders that may be present.

The sources of aluminum and silicon atoms are provided in the form of particles which may have any convenient particle size. These particles may have effective particle sizes as small as 10 nanometers or as large as about 50 microns. Preferably, these particles have a diameter of at least 100 nanometers and more preferably at least 500 nanometers, up to 30 microns, preferably up to 10 microns. "Effective" particle size, as used throughout this specification, is the size of the primary particles themselves if not agglomerated, or, if they are in the form of agglomerates, that of the agglomerates.

The green body also contains porogen particles. The porogen particles should constitute from about 5 to about 60 weight percent of the green body, exclusive of any binders and liquids that may be present. The porogen particles may constitute at least 10, at least 20 or at least 30% of the weight of the green body, exclusive of any binder or liquids. The porogen particles may constitute up to 50%, more preferably up to 40% of the weight of the green body, exclusive of any binder.

The porogen particles should have a volume average effective particle size of at least one micron, preferably at least 3 microns, more preferably at least 5 microns, up to 50 microns, preferably up to 40 microns, more preferably up to 25 microns and still more preferably up to 10 microns. The porogen particles may have sizes close to those of the particles of the aluminum and silicon sources. At least 80 volume percent of the porogen particles should have an effective particle size of between 1 and 50 microns. More preferably, at least 80 volume percent of the porogen particles should have an effective particle size of between 3 and 25 microns. Even more preferably, at least 90 volume percent of the particles should have an effective particle size of between 3 and 10 microns. Particle sizes in this context refer to the longest dimension of the particles. The particles preferably have aspect ratios (longest dimension divided by shortest dimension) of less than 10, more preferably less than 5 and even more preferably less than 2.

The porogen particles are made up of a material that converts to gaseous product(s) at an elevated temperature that is below 1100°C. If a binder is used, as is preferred, the porogen particles form a gas at a temperature that is higher than that required to remove the binder. The porogen particles preferably form the gaseous products when brought to a temperature of at least 400°C, preferably at least 700°C, but not higher than 1000°C, preferably not higher than 900°C. The porogen particles can form a gas by, for example, sublimation, thermal decomposition, or by through one or more chemical reactions, such as oxidation. In the case of an oxidation reaction, the removal of the porogen is performed in an oxidizing atmosphere such as air, oxygen-enriched air or oxygen. In other cases, the porogen particles may sublime or thermally decompose, in which case the atmosphere can be any gas or mixture of gases which does not react with the other starting materials under the conditions of the porogen removal.

A preferred porogen is carbon or graphite particles. Carbon and graphite particles having particle sizes as described above are commercially available from many sources. One suitable source of suitable carbon and graphite particles is Asbury Carbons, Inc., Asbury, New Jersey. The carbon or graphite particles preferably have a carbon content of at least 80% by weight, more preferably at least 90% by weight, even more preferably at least 95% by weight and still more preferably at least 98% by weight.

The green body may contain various other materials such as sintering aids, various impurities, particularly from natural clay starting materials, or a property-enhancing compound such as is described in WO 04/096729. The property-enhancing compound is an oxide of one or more of Mg, Ca, Fe, Na, K, Ce, Pr, Nd, Sm, Eu, Gd, Tb, Dy, Ho, Er, Tm, Yb, Lu, B, Y, Sc and La, or a compound of one or more of the foregoing which forms an oxide when heated in air. If not an oxide, the property-enhancing compound may be, for example, a chloride, fluoride, nitrate, chlorate, carbonate or silicate, or a carboxylate such as acetate. More preferred compounds are those of Nd, B, Y, Ce, Fe and/or Mg. An especially preferred property-enhancing compound is a hydrated magnesium silicate such as talc. Another preferred property-enhancing compound is a mixture of an Nd, Ce, Fe and/or B compound with an Mg, Ca, Y, Pr, Sm, Eu, Gd, Tb, Dy, Ho, Er, Tm, Yb, Lu, Sc and/or La compound. If the property-enhancing compound contains silicon (such as when it is a silicate), the amount of silicon provided by the property-enhancing compound should be taken into account in calculating the aluminum-silicon ratio in the green body. A property-enhancing compound suitably constitutes at least 0.01, preferably at least 0.1, more preferably at least 0.5 and even more preferably at least 1 percent of the weight of the green body, exclusive of any binder or liquid that may be present. It may constitute as much as 12 percent of the weight of the green body, but preferably constitutes up to 10, more preferably up to about 5 and even more preferably up to 2 percent of the weight of the green body, exclusive of any binder or liquid.

The liquid is any material that is a liquid at a temperature of no greater than 100°C, preferably no greater than 50°C and even more preferably no greater than 25°C, and which wets the other components sufficiently that a shapeable, cohesive mass is formed. Water is preferred, but other organic liquids can be used if they wet the other materials. The liquid should not dissolve the other components. All or part of the liquid can also function as a solvent or dispersant for a binder that may be used to form the green body.

The starting materials are mixed together to form a shapeable, coherent mass, which is sometimes referred to below as a "wet mix". By "coherent", it is meant that the components of the wet mix stick together to form a viscous, fluid mass. By "shapeable", it is meant that the mixture, being a viscous fluid material, can flow without breaking up under a light or moderate applied force and so can be formed into various shapes by application of pressure.

A binder can be, and preferably is, mixed in with the other materials to help bind the particles of the starting materials together until the green body is fired. The binder is a material that can be thermally removed from the green body at a lower temperature than is need to remove the porogen. The binder can be thermally removed by undergoing a sublimation, thermal decomposition and/or other chemical reaction such as oxidation. The binder preferably can be thermally removed at a temperature of no greater than 400°C, preferably no greater than 350°C.

The binder is suitably an organic polymer, which may be soluble in water or other solvent. A preferred type of binder is a water-soluble organic polymer, especially a water-soluble cellulose ether. The binder is generally very finely dispersed or distributed throughout the green body. In general, the binder may constitute from about 1 to about 7 percent of the weight of the green body. A more preferred amount is from about 2 to 5 weight percent. If the binder is in the form of a particulate, it may make a small contribution to the porosity of the acicular mullite body.

The wet mix is then formed into a green body having a desired mass, shape and dimensions. Any method that is useful for shaping a wet mix into a green body can be used. Preferred methods include injection molding, extrusion, slip casting, tape casting and the like. Suitable such processes are described in Introduction to the Principles of Ceramic Processing, J., Reed, Chapters 20 and 21, Wiley Interscience, 1988.

The dimensions of the acicular mullite body will usually closely match those of the green body. For that reason, the green body is usually formed into the shape and dimensions that are desired in the acicular mullite product. The green body typically is from about 40 to 70% of theoretical density. Theoretical density is determined from the densities of the various components of the green body and their respective weight fractions.

The green body is heated to sequentially remove the binder and the porogen. By "sequentially", it is meant simply that the binder is removed prior to the removal of the porogen. In most cases, the binder will be removed at a lower temperature than at which the porogen is removed. The binder and porogen are removed sequentially by first heating the green body to a temperature (and other necessary conditions, such as the presence of an oxidizing atmosphere if the binder is removed via an oxidation reaction) at which the binder is converted to a gas, but at which the porogen does not form a gas. This temperature is preferably no greater than 400°C. A preferred temperature is from 300 to 400°C. Organic extrusion additives that may be present also are removed during this step.

After the binder is removed, the green body is subjected to temperature and other conditions at which the porogen particles sublime or react, and as a result are converted to one or more gaseous by-products. The temperature during this will be in most cases higher than when the binder is removed. The porogen particles preferably are converted directly from the solid state to form a gas or gases, without melting. The gaseous by-products readily diffuse out of the green body through small voids between adjacent particles of the starting materials. As before, an oxidizing atmosphere is present in this step if the porogen is converted to a gas through an oxidation reaction. However, a reduced (compared with air) oxygen environment can be used in this step to prevent the porogen from being removed too quickly. This can prevent cracking and other defects from forming. The temperature during this step is generally greater than 400°C and preferably greater than 700°C. The temperature does not exceed 1100°C, preferably does not exceed 1000°C and even more preferably does not exceed 900°C during this step.

The conversion of a solid porogen particle to gases creates a pore in the green body at the locus of the porogen particle. This pore is of the approximate size and shape of the porogen particle prior to removing the porogen. Therefore, the porogen removal step produces a porous body having pores that are of the order of from 1 to 50 microns in diameter, preferably from 5 to 40 microns and more preferably from 10 to 25 microns. Because the porogen particles are converted to gasses and escape from the green body, the porogen removal step is accompanied by a reduction in the density of the green body. After the porogen particles are removed, the density of the body may be from about 15% to 50% of the theoretical density, depending on the amount of porogen used. The density after porogen removal step is preferably no more than 35% and even more preferably no more than 30% of the theoretical density. Most preferably, the density after porogen removal step is from 20 to 30% of the theoretical density.

The separate removal of binder and porogen reduces the amount of cracking and other defects that form in the body during these steps. Although the invention is not limited by any theory, it is believed that the removal of the binder and the porogen may involve exothermic processes, mainly oxidation, that can create rapid local changes in the temperature of the body. This can lead to significant temperature differences within the body, which in turn can lead to uneven or rapid thermal expansion and produce cracks or other defects. Separating the binder and porogen removal is believed to reduce the extent to which localized temperature differences develop within the part, thereby reducing the amount of cracking and other defects caused by uneven or rapid thermal expansion or contraction.

The porous green body is then calcined by heating it to a temperature of at least 1100°C, up to 1400°C. A temperature of at least 1150°C is preferred and a temperature of at least 1200°C is more preferred. The preferred temperature is up to 1350°C, especially up to 1300°C. The calcination step is conducted for a period of time sufficient to increase the fracture strength of the body. The amount of time needed will depend somewhat on the part size and porosity. Typically, from 15 minutes to 5 hours is sufficient. More typically, from about 30 minutes to 3 hours is needed. An especially preferred calcination time is from 45 minutes to 2 hours.

The body gains fracture strength during the calcination step. This is believed to be mainly due to some sintering of the starting materials. Some fluorotopaz or even mullite formation may occur during this step, although this is not likely due to the absence of a fluorine-containing gas. The calcined body after the calcination step preferably has a fracture strength of at least 3MPa, and more preferably at least 5MPa, even at a porosity of from 70 to 85%.

The atmosphere during the, binder removal, porogen removal and calcination steps may be air, oxygen, nitrogen, or an inert gas. Air is preferred. However, the atmosphere during these steps should be essentially devoid of a fluorine-containing gas, in order to minimize fluorotopaz formation at this stage. Pressure conditions during the calcination step may be atmospheric, subatmospheric or superatmospheric.

The porosity and the pore size of the calcined body tend to be close to that of the green body after removal of the porogen but before calcination. The porosity if preferably from 70 to 85% and the volume average pore size is preferably no greater than about 50 microns.

The calcined body is ready to be converted to mullite in a separate step. Mullite forms in a two-step reaction, in which the starting sources of aluminum and silicon atoms react to form a fluorotopaz, which subsequently decomposes to form mullite. These reactions can be carried out in any convenient manner, including those known in the art, starting with the porous green body. Methods for making a porous acicular mullite body as described in WO 92/11219, WO 03/082773 and WO 04/096729 are generally applicable here.

The green body is converted to fluorotopaz by heating it in the presence of a process gas that contains a fluorine-containing compound. The fluorine-containing compound is suitably SiF₄, AlF₃, HF, Na₂SiF₆, NaF, NH₄F or some mixture of any two or more thereof. SiF₄ is preferred. It is typically preferred to heat the green body under vacuum or an inert atmosphere such as nitrogen or a noble gas until it attains a temperature of at least 500°C. Thereafter, the fluorine-containing compound is introduced into the furnace, and heating is continued until a temperature of at least 700°C up to about 950°C is achieved.

In preferred processes, the process temperature during the fluorotopaz-forming step does not exceed 800°C. This allows the fluorotopaz-forming reaction to be conducted separately from the decomposition reaction to form mullite, which can occur at temperatures as low as 800°C even in the presence of a fluorine-containing compound in the process gas.

The process gas during the fluorotopaz-forming reaction may contain up to 100% of the fluorine-containing compound, but it is more practical to use a mixture that contains from 80 to 99%, especially from 85 to 95%, by weight of the fluorine-containing compound, with the remainder being various gases products and by-products that are formed from impurities contained in the starting materials or from the fluorotopaz-forming or mullite-forming reactions.

A flow of the process gas may be established in the furnace during the fluorotopaz-forming step. This may promote more uniform reaction rates between individual bodies that are being processed together, and in some cases even within a single body, by replenishing the fluorine-containing compound to regions of the oven from which it may have become depleted.

The partial pressure of the fluorine-containing compound in the furnace (or enclosed region) throughout the reaction can be adjusted or maintained to a desired level. This in turn allows for some control over the reaction rate, which, in turn allows for control over the temperature of the green body or bodies during the fluorotopaz-forming step.

The fluorotopaz decomposes to form acicular mullite crystals in the porous body. Fluorotopaz releases silicon tetrafluoride as it decomposes. This process is endothermic. The decomposition reaction can occur at temperatures as low as about 800°C. At certain temperatures up to about 900°C, the fluorotopaz-forming reaction and fluorotopaz-decomposition reactions can both occur, provided that a fluorine source is present. However, it is preferred to select conditions such that the reactions occur sequentially rather than simultaneously. Therefore, the temperature during the fluorotopaz-decomposition step is preferably at least 1000°C, and may be as high as 1700°C. A more preferred temperature is at least 1050°C, or at least 1100°C. The preferred temperature may be up to 1500°C and a more preferred temperature is up to 1200°C.

The fluorotopaz decomposition reaction is generally performed in a non-oxidizing atmosphere. The fluorine-containing compound may be present in the process gas during this step, but the partial pressure thereof is advantageously not greater than 755 mm Hg. The partial pressure of the fluorine-containing compound can be any lower value. It is also possible to use an atmosphere that is devoid of the fluorine-containing compound. The partial pressure of the fluorine-containing compound can be used as a process variable for controlling the size of the mullite needles that are formed during this step. The process gas may be flowing or static during this step, although a flowing atmosphere may provide some benefit in reducing or eliminating localized high concentrations of fluorine-containing compound, which might slow the fluorotopaz decomposition reaction.

After the fluorotopaz-decomposition reaction is completed, the body may be heated in the absence of the fluorine-containing compound, preferably in air, to remove residual fluorine that may be present.

As the fluorotopaz decomposes to form mullite, a mass of interconnected needle-like crystals is created. Very surprisingly, the calcination step has little or no adverse effect on the subsequent growth of high aspect ratio mullite grains when the structure is highly porous. This is different than the effect seen at lower porosities (such as up to about 60% porosity), in which case the calcinations step has a significant adverse effect on subsequent mullite crystal growth. The crystals are comprised mainly of a crystalline mullite, although it is possible for small quantities of other crystalline and/or glassy phases to be present. For example, the crystals may contain up to about 2 volume percent of a crystalline silica phase such as cristobalite, as described in WO 03/082773, or up to about 10 volume percent of a glassy oxide phase that may contain silicon and/or aluminum as well as one or more metals contributed by a sintering aid and/or the property-enhancing compound described before.

The acicular mullite crystals are bonded together at points of contact to form a porous mass having essentially the same overall geometry and dimensions as the green body. The aspect ratio of the mullite crystals is typically at least 5, preferably at least 10, more preferably at least 20. The crystals may have a mean grain diameter of from 5 to 50 microns.

The porosity of the acicular mullite body will vary in response to the amount of the porogen that is present in the green body before it is calcined. When very low levels of porogen particles are used, the acicular mullite body produced by the inventive process may have a porosity of as little as 50 volume percent, although more typically the porosity is at least 60 volume percent. Higher levels of porogen particles tend to lead to increased porosity. The porosity may be as much as 80-85 volume percent. Preferred acicular mullite bodies made in accordance with the invention have porosities of from 70 to 85 volume percent, and more preferably from 75 to 82 volume percent. Porosities this high have been very difficult if not impossible to obtain using conventional methods, when the green body is prepared from a wet mix without the porogen.

Macroscopic openings, channels or voids that may be present in the acicular mullite body are not considered as "pores" or as contributing to the porosity of the body. Macroscopic openings, for purposes of this invention, are considered to be those having a diameter or smallest dimension of at least 500 microns. Thus, for example, channels, holes, openings or other macroscopic features that are fabricated into the acicular mullite body, either during or after it is formed are not considered to be pores for purposes of this invention. The channels in a honeycomb construction are not pores for purposes of this invention.

An acicular mullite body produced in accordance with the invention tends to have excellent fracture strength, at a given porosity. Fracture strength tends to vary inversely with porosity. An acicular mullite body produced in the invention, having a porosity of from 80 to 85 volume percent, often has a fracture strength, measured using 4 point bend test according to ASTM -1161, of 10 MPa. Less porous acicular mullite bodies may using the invention tend to have higher fracture strengths. The excellent fracture strength achieved with this invention can allow higher porosity bodies to be used than could be used otherwise. Higher porosity offers a distinct advantage in many filtration and catalysis applications, because smaller pressure drops are seen during operation. Alternatively, higher porosity can permit a greater loading of a functional material such as a catalyst onto the mullite body, while retaining equivalent pressure drops across the body.

The material thermal shock resistance of acicular mullite bodies made in accordance with the invention is also very good, due to their high porosities. Material thermal shock resistance tends to increase with porosity; at a porosity of about 80% the thermal shock resistance is typically 50-75% higher than when the porosity is only about 60%. This invention therefore provides a way to make acicular mullite bodies having very good thermal shock resistance.

Average pore sizes tend to be quite small in acicular mullite bodies made in accordance to the invention. The volume average pore diameter is typically less than 50 microns, preferably from 5 to 40 microns and is often between 10 and 25 microns. Pore diameters are measured using mercury porosimetry methods.

Acicular mullite bodies made in accordance with the invention are useful in a variety of filtration applications, and/or as carriers for various types of functional materials, of which catalysts are of particular interest. The thermal stability of the mullite bodies makes them well suited for high temperature applications, such as for treating exhaust gases from mobile or stationary power plants.

The acicular mullite body can be used as a particulate filter, especially for removing particulate matter power plant (mobile or stationary) exhaust gases. A specific application of this type is a soot filter for an internal combustion engine, especially a diesel engine.

Functional materials can be applied to the acicular mullite body using various methods. The functional materials may be organic or inorganic. Inorganic functional materials such as metals and metal oxides are of particular interest as many of these have desirable catalytic properties, function as sorbents or perform some other needed function. One method of introducing a metal or metal oxide onto the acicular mullite body is by impregnating the body with a solution of a salt or acid of the metal, and then heating or otherwise removing the solvent and, if necessary calcining or otherwise decomposing the salt or acid to form the desired metal or metal oxide.

Thus, for example, an alumina coating or a coating of another metal oxide is often applied in order to provide a higher surface area upon which a catalytic or sorbent material can be deposited. Alumina can be deposited by impregnating the acicular mullite body with colloidal alumina, followed by drying, typically by passing a gas through the impregnated body. This procedure can be repeated as necessary to deposit a desired amount of alumina. Other ceramic coatings such as titania can be applied in an analogous manner.

Metals such as barium, platinum, palladium, silver, gold and the like can be deposited on the acicular mullite body by impregnating the body (which is preferably coated with alumina or other metal oxide) with a soluble salt of the metal, such as, for example, platinum nitrate, gold chloride, rhodium nitrate, tetraamine palladium nitrate, barium formate, and the like, followed by drying and preferably calcination. Catalytic converters for power plant exhaust streams, especially for vehicles, can be prepared from the acicular mullite body in that manner.

Suitable methods for depositing various inorganic materials onto an acicular mullite body are described, for example, in US 205/0113249 and WO2001045828.

In an especially preferred embodiment, alumina and platinum, alumina and barium or alumina, barium and platinum can be deposited onto the acicular mullite body in one or more steps to from a filter that is simultaneously capable of removing particulates such as soot, NOx compounds, carbon monoxide and hydrocarbons from a power plant exhaust, such as from vehicle engines.

The following examples are provided to illustrate the invention but are not intended to limit the scope thereof. All parts and percentages are by weight unless otherwise indicated. Unless stated otherwise, all molecular weights expressed herein are weight average molecular weight.

### Examples 1-4 and Comparative Example A

Comparative Example A is prepared from the following base formulation:

| Component | Supplier | Quantity (parts by weight) |
|---|---|---|
| Hywite ball clay | Imerys | 25.35 |
| AGs Argical C88R clay | AGS Mineraux | 25.35 |
| Kappa-alumina | Ceramiques Techniques et Industrielles | 46.40 |
| Talc (MB-50-60) | Brenntag Specialties | 2.60 |
| Iron oxide | American Elements | 0.30 |
| Cellulose ethers (as aqueous solution) | Dow Chemical | 7.00 (plus weight of water) |

The components are blended into a wet mix, which is extruded to form a green body. The dimensions of the green body are 13 mm X 1.8 mm X 75 mm. The green body weighs approximately 2 grams.

The green body is heated such that the binder burns out, then the porogen particles are removed and the body is then calcined at 1100°C for 2 hours. The calcined body is then transferred to a separate oven and processed into mullite.

The resulting acicular mullite body has a porosity of about 56%.

Example 1 is prepared in the same manner, except (1) 15 parts by weight of carbon particles (Asbury 4023, Asbury Carbons, Inc., particle size from 4 to 7.5 microns) are also included in the wet mix and (2) after shaping the mixture into a green body, the carbon particles are calcined by heating to 1065°C for 2 hours in air. The resulting acicular mullite body has a porosity of about 63%.

Examples 2-4 are prepared in the same manner as Example 1, using 30, 45, and 60 parts by weight of the carbon particles, respectively. Porosities for Examples 2-4 are 70%, 75% and 81%, respectively.

Fracture strength is measured for each of Examples 1-4 and Comparative Sample A according to ASTM 1161. Material thermal shock resistance is calculated based on the fracture strength and the elastic modulus of the samples. Results are as indicated in Table 1.

**Table 1**

| Example or Comparative Sample No. | Amount of Porogen, % | Porosity, % | Fracture Strength, MPa | Material Thermal Shock Resistance, °C |
|---|---|---|---|---|
| A* | 0 | 56 | 32 | ∼250 |
| 1 | 13 | 63 | 26 | ∼260 |
| 2 | 23 | 70 | 13 | ∼280 |
| 3 | 31 | 75 | 8 | ∼340 |
| 4 | 37.5 | 81 | 3 | ∼410 |

### Example 5

Six acicular mullite bodies made in the general manner described in Example 1, with porosities ranging from 64-75%. Part dimensions are 0.75 in X 0.75 in X 3 in (18 X 18 X 76 mm). The bodies are converted to diesel particulate filters by alternately plugging the channels on the front or back face to produce a checkerboard pattern of plugs on each face. Five of the plugged bodies are separately saturated with a colloidal alumina solution (20% Al₂O₃, Alfa Aesar). Excess solution is removed from the channels by shaking. Air is flowed through the saturated body, gradually increasing the flow rate to 100 liters/minute, until the body becomes dry. In some cases, the impregnation and drying steps are repeated to increase the alumina loading on the part. The dried bodies are calcined at 500°C in air for one hour. The sixth body is not impregnated, and is used as a control.

The porosities and alumina loading of the six samples (designated as Examples 5-1 through 5-6, respectively) are as indicated in Table 2. The exterior surface of each particulate filter is sealed by tightly wrapping it in electrical tape. Air is flowed through each of Examples 5-1 through 5-6 at the rate of 100 liters/minute, and the pressure drop across the part is measured in each case. Results are as indicated in Table 2.

**Table 2**

| Example No. | Porosityl¹, % | Alumina loading, g/L | Pressure Drop, in H₂O. |
|---|---|---|---|
| 5-1 | 64 | 0 | 5.5 |
| 5-2 | 64 | 74 | 7 |
| 5-3 | 64 | 128 | 11 |
| 5-4 | 64 | 170 | 24.5 |
| 5-5 | 70 | 183 | 14 |
| 5-6 | 75 | 170 | 7 |

| | | | |
|---|---|---|---|
| ¹Prior to alumina loading. | | | |

The data in Table 3 indicates that pressure drops increase with increasing alumina loading, when porosity is held constant. However, greater porosity allows for a significant greater amount of alumina to be applied to the mullite body while retaining reasonable operating pressures. Thus, for example, when the porosity of the acicular mullite body is 64%, a loading of 74 g/L of alumina results in a pressure drop of about 7 inches of water. However, when the porosity is increased to 75%, a loading of 170 g/L of alumina, or about 2-1/2 times as great, results in an equivalent pressure drop. Examples 5-4 and 5-6 have identical alumina loadings, but the pressure drop across Example 5-6 is only about one-third that of Example 5-4, due to the higher porosity of Example 5-6 vs. Example 5-4 (75% vs. 64%).

### Examples 6-8

10 cell by 10 cell by 3 inch (7.5 cm) long diesel particulate filters (200 cells per square inch) are fabricated from acicular mullite bodies prepared in the general manner described in Examples 2-4. Each is each loaded with alumina, barium and platinum as follows. The bodies are separately saturated with a colloidal alumina solution (20% Al₂O₃, Alfa Aesar). Excess solution in the channels is removed by shaking the body, and air is flowed through the saturated body at a flow rate of 20 liters/minute, until the body becomes dry. The saturation and drying steps are repeated as needed to increase the alumina loading on the parts to 125 g/L. The dried bodies are calcined at 500°C for one hour in air.

The alumina-coated parts are immersed a dilute platinum nitrate solution containing sufficient platinum to result in the deposition of 3.6 g of platinum/liter of monolith. The bodies are then dried and calcined in air at 500°C for one hour. The parts are then impregnated with an aqueous barium formate solution containing sufficient barium to result in the deposition of 0.25 moles of barium/L of monolith, dried by flowing air through the part, and then calcined at 600°C for one hour.

The resulting impregnated bodies are useful as filters/catalytic converters for power plant exhaust gases. Their performance as NOx converters is evaluated by subjecting them to rich-lean cycling at 400°C using a synthetic exhaust gas. In each cycle the lean feed is fed at a rate of 20 liters/minute for 60 seconds, followed by the rich feed at the same rate for 3 seconds. The lean feed contains 200 ppm NO, 5% oxygen and the balance nitrogen. The rich feed contains 5000 ppm of propylene and the balance nitrogen. The gases leaving the bodies are measured for NOx compounds by FTIR over 10 cycles, and the % NOx conversion to N₂ is calculated by comparing the amount of NO fed with the quantities of NO, NO₂, N₂O and NH₃ detected in the gas exiting the reactor. Results are in Table 3.

**Table 3**

| Ex. No. | Porosity, % | Barium Loading, mol/L | Platinum loading, g/L | Alumina loading, g/L | NOx conversion, % |
|---|---|---|---|---|---|
| 6 | 70 | 0.26 | 3.6 | 125 | 98 |
| 7 | 75 | 0.23 | 3.6 | 125 | 93 |
| 8 | 81 | 0.20 | 3.6 | 125 | 98 |

In all cases, NO conversion to N₂ is excellent, demonstrating the efficacy of both catalysts and sorbents deposited on these high porosity substrates.

## Claims

1. A method for making an acicular mullite body, comprising;
a) forming a cohesive mass from components that include a source of aluminum atoms and a source of silicon atoms, from 5 to 60 weight percent, based on all components except liquid(s) and binder(s), of porogen particles having a volume average effective particle size of from 1 to 50 microns, at least one liquid and optionally a binder; then
b) shaping the cohesive mass into a green body;
c) heating the green source body, under an atmosphere that is substantially devoid of a fluorine-containing gas, to a temperature sufficient to sequentially remove the binder, if present, and then convert the porogen particles to a gas and create a porous green body, then
d) calcining the porous green body, under an atmosphere that is substantially devoid of a fluorine-containing gas, at a temperature of between 1100°C and 1400°C to form a porous calcined body; and then
e) heating the porous calcined body in the presence of an atmosphere that contains a fluorine-containing compound, to a temperature such that the source of aluminum atoms and the source of silicon atoms in the calcined body react with the fluorine-containing compound to form fluorotopaz, and then
f) heating the body to a temperature above 800°C to decompose the fluorotopaz to form a porous acicular mullite body.

2. The method of claim 1, wherein the porous acicular mullite body has a porosity of from 70 to 85 volume percent.

3. The method of claim 1 or 2, wherein the acicular mullite body has an average pore size of from 1 to 50 microns.

4. The method of any of claims 1-3, wherein the porogen constitutes at least 30% of the weight of the green body.

5. The method of any of claims 1-4, wherein the green body includes a binder.

6. The method of claim 5 wherein step c) is conducted by heating the green body to a temperature of up to 400°C to remove the binder, and then to a temperature of from 700 to 1000°C to remove the porogen particles.

7. The method of any of claims 1-6 wherein step b) is conducted by extrusion, injection molding, or casting.

8. The method of any of claims 1-7, wherein step f) is conducted at a temperature of at least 1000°C.

9. The method of any of claims 1-8, wherein the fluorine-containing compound includes SiF₄.

10. The method of any of claims 1-9, wherein, after step d), the porous calcined body has a fracture strength of at least 3 MPa.

11. The method of any of claims 1-10, wherein the acicular mullite body has an average pore size of from 5 to 40 microns.

12. A porous mullite precursor calcined body having a porosity of from 70 to 85% porosity and which has a fracture strength of at least 3 MPa,
preparable by
a) forming a cohesive mass from components that include a source of aluminum atoms and a source of silicon atoms, from 5 to 60 weight percent, based on all components except liquid(s) and binder(s), of porogen particles having a volume average effective particle size of from 1 to 50 microns, at least one liquid and optionally a binder; then
b) shaping the cohesive mass into a green body;
c) heating the green source body, under an atmosphere that is substantially devoid of a fluorine-containing gas, to a temperature sufficient to sequentially remove the binder, if present, and then convert the porogen particles to a gas and create a porous green body, then
d) calcining the porous green body, under an atmosphere that is substantially devoid of a fluorine-containing gas, at a temperature of between 1100°C and 1400°C to form a porous calcined body.

13. A porous acicular mullite body made in accordance with any of claims 1-11, having a porosity of at least 70 volume percent; an average pore size of no greater than 50 microns, and a fracture strength of at least 10 MPa.

14. A porous acicular mullite carrier of claim 13 coated with at least one catalytically active material or sorbent.

## Patentansprüche

1. Ein Verfahren zum Herstellen eines Körpers aus nadelförmigem Mullit, das Folgendes beinhaltet:
a) Bilden einer kohäsiven Masse aus Komponenten, die eine Quelle von Aluminiumatomen und eine Quelle von Siliziumatomen, von 5 bis 60 Gewichtsprozent, bezogen auf alle Komponenten mit Ausnahme von Flüssigkeit(en) und Bindemittel(n), Porogenpartikel mit einer effektiven Partikelgröße im Volumendurchschnitt von 1 bis 50 Mikrometer, mindestens eine Flüssigkeit und optional ein Bindemittel umfassen; dann
b) Formen der kohäsiven Masse zu einem Grünkörper;
c) Erwärmen des grünen Quellenkörpers unter einer Atmosphäre, die im Wesentlichen frei von einem fluorhaltigen Gas ist, auf eine ausreichende Temperatur, um sequenziell das Bindemittel, falls vorhanden, zu entfernen und dann die Porogenpartikel in ein Gas umzuwandeln und einen porösen Grünkörper zu erzeugen, dann
d) Calcinieren des porösen Grünkörpers unter einer Atmosphäre, die im Wesentlichen frei von einem fluorhaltigen Gas ist, bei einer Temperatur von zwischen 1100 °C und 1400 °C, um einen porösen calcinierten Körper zu bilden; und dann
e) Erwärmen des porösen calcinierten Körpers in Gegenwart einer Atmosphäre, die eine fluorhaltige Verbindung beinhaltet, auf eine derartige Temperatur, dass die Quelle von Aluminiumatomen und die Quelle von Siliziumatomen in dem calcinierten Körper mit der fluorhaltigen Verbindung reagieren, um Fluortopas zu bilden, und dann
f) Erwärmen des Körpers auf eine Temperatur von über 800 °C, um den Fluortopas zu zersetzen, um einen porösen Körper aus nadelförmigem Mullit zu bilden.

2. Verfahren gemäß Anspruch 1, wobei der poröse Körper aus nadelförmigem Mullit eine Porosität von 70 bis 85 Volumenprozent aufweist.

3. Verfahren gemäß Anspruch 1 oder 2, wobei der Körper aus nadelförmigem Mullit eine durchschnittliche Porengröße von 1 bis 50 Mikrometer aufweist.

4. Verfahren gemäß einem der Ansprüche 1-3, wobei das Porogen mindestens 30 % des Gewichts des Grünkörpers ausmacht.

5. Verfahren gemäß einem der Ansprüche 1-4, wobei der Grünkörper ein Bindemittel umfasst.

6. Verfahren gemäß Anspruch 5, wobei Schritt c) durchgeführt wird, indem der Grünkörper auf eine Temperatur von bis zu 400 °C erwärmt wird, um das Bindemittel zu entfernen, und dann auf eine Temperatur von 700 bis 1000 °C, um die Porogenpartikel zu entfernen.

7. Verfahren gemäß einem der Ansprüche 1-6, wobei Schritt b) durch Extrusion, Spritzgießen oder Gießen durchgeführt wird.

8. Verfahren gemäß einem der Ansprüche 1-7, wobei Schritt f) bei einer Temperatur von mindestens 1000 °C durchgeführt wird.

9. Verfahren gemäß einem der Ansprüche 1-8, wobei die fluorhaltige Verbindung SiF₄ umfasst.

10. Verfahren gemäß einem der Ansprüche 1-9, wobei der poröse calcinierte Körper nach Schritt d) eine Bruchfestigkeit von mindestens 3 MPa aufweist.

11. Verfahren gemäß einem der Ansprüche 1-10, wobei der Körper aus nadelförmigem Mullit eine durchschnittliche Porengröße von 5 bis 40 Mikrometer aufweist.

12. Ein poröser calcinierter Mullitvorläuferkörper, der eine Porosität von 70 bis 85 % Porosität aufweist und der eine Bruchfestigkeit von mindestens 3 MPa aufweist, zubereitbar durch:
a) Bilden einer kohäsiven Masse aus Komponenten, die eine Quelle von Aluminiumatomen und eine Quelle von Siliziumatomen, von 5 bis 60 Gewichtsprozent, bezogen auf alle Komponenten mit Ausnahme von Flüssigkeit(en) und Bindemittel(n), Porogenpartikel mit einer effektiven Partikelgröße im Volumendurchschnitt von 1 bis 50 Mikrometer, mindestens eine Flüssigkeit und optional ein Bindemittel umfassen; dann
b) Formen der kohäsiven Masse zu einem Grünkörper;
c) Erwärmen des grünen Quellenkörpers unter einer Atmosphäre, die im Wesentlichen frei von einem fluorhaltigen Gas ist, auf eine ausreichende Temperatur, um sequenziell das Bindemittel, falls vorhanden, zu entfernen und dann die Porogenpartikel in ein Gas umzuwandeln und einen porösen Grünkörper zu erzeugen, dann
d) Calcinieren des porösen Grünkörpers unter einer Atmosphäre, die im Wesentlichen frei von einem fluorhaltigen Gas ist, bei einer Temperatur von zwischen 1100 °C und 1400 °C, um einen porösen calcinierten Körper zu bilden.

13. Ein poröser Körper aus nadelförmigem Mullit, der gemäß einem der Ansprüche 1-11 hergestellt ist, mit einer Porosität von mindestens 70 Volumenprozent, einer durchschnittlichen Porengröße von nicht mehr als 50 Mikrometer und einer Bruchfestigkeit von mindestens 10 MPa.

14. Poröser Träger aus nadelförmigem Mullit gemäß Anspruch 13, der mit mindestens einem katalytisch aktiven Material oder Sorptionsmittel beschichtet ist.

## Revendications

1. Une méthode pour réaliser un corps de mullite aciculaire, comprenant ;
a) le fait de former une masse cohésive à partir de composants qui incluent une source d'atomes d'aluminium et une source d'atomes de silicium, de 5 à 60 pour cent en poids, rapporté à tous les composants à l'exception de liquide(s) et de liant(s), de particules de porogène ayant une taille de particule effective moyenne en volume allant de 1 à 50 microns, au moins un liquide et facultativement un liant ; puis
b) le fait de conformer la masse cohésive en un corps vert ;
c) le fait de chauffer le corps source vert, sous une atmosphère qui est substantiellement dépourvue d'un gaz contenant du fluor, jusqu'à une température suffisante pour éliminer séquentiellement le liant, si présent, et ensuite convertir les particules de porogène en un gaz et créer un corps vert poreux, puis
d) le fait de calciner le corps vert poreux, sous une atmosphère qui est substantiellement dépourvue d'un gaz contenant du fluor, à une température comprise entre 1 100 °C et 1 400 °C afin de former un corps calciné poreux ; et ensuite
e) le fait de chauffer le corps calciné poreux en présence d'une atmosphère qui contient un composé contenant du fluor, jusqu'à une température telle que la source d'atomes d'aluminium et la source d'atomes de silicium dans le corps calciné entrent en réaction avec le composé contenant du fluor afin de former du fluorotopaze, et ensuite
f) le fait de chauffer le corps jusqu'à une température au-dessus de 800 °C pour décomposer le fluorotopaze afin de former un corps de mullite aciculaire poreux.

2. La méthode de la revendication 1, dans laquelle le corps de mullite aciculaire poreux a une porosité allant de 70 à 85 pour cent en volume.

3. La méthode de la revendication 1 ou de la revendication 2, dans laquelle le corps de mullite aciculaire a une taille de pore moyenne allant de 1 à 50 microns.

4. La méthode de n'importe lesquelles des revendications 1 à 3, dans laquelle le porogène constitue au moins 30 % du poids du corps vert.

5. La méthode de n'importe lesquelles des revendications 1 à 4, dans laquelle le corps vert inclut un liant.

6. La méthode de la revendication 5 dans laquelle l'étape c) est menée en chauffant le corps vert jusqu'à une température allant jusqu'à 400 °C afin d'éliminer le liant, et ensuite jusqu'à une température allant de 700 à 1 000 °C afin d'éliminer les particules de porogène.

7. La méthode de n'importe lesquelles des revendications 1 à 6 dans laquelle l'étape b) est menée par extrusion, moulage par injection ou coulage.

8. La méthode de n'importe lesquelles des revendications 1 à 7, dans laquelle l'étape f) est menée à une température d'au moins 1 000 °C.

9. La méthode de n'importe lesquelles des revendications 1 à 8, dans laquelle le composé contenant du fluor inclut SiF₄.

10. La méthode de n'importe lesquelles des revendications 1 à 9, dans laquelle, après l'étape d), le corps calciné poreux a une résistance à la rupture d'au moins 3 MPa.

11. La méthode de n'importe lesquelles des revendications 1 à 10, dans laquelle le corps de mullite aciculaire a une taille de pore moyenne allant de 5 à 40 microns.

12. Un corps calciné de précurseur de mullite poreux ayant une porosité allant de 70 à 85 % de porosité et qui a une résistance à la rupture d'au moins 3 MPa,
pouvant être préparé en
a) formant une masse cohésive à partir de composants qui incluent une source d'atomes d'aluminium et une source d'atomes de silicium, de 5 à 60 pour cent en poids, rapporté à tous les composants à l'exception de liquide(s) et de liant(s), de particules de porogène ayant une taille de particule effective moyenne en volume allant de 1 à 50 microns, au moins un liquide et facultativement un liant ; puis
b) conformant la masse cohésive en un corps vert ;
c) chauffant le corps source vert, sous une atmosphère qui est substantiellement dépourvue d'un gaz contenant du fluor, jusqu'à une température suffisante pour éliminer séquentiellement le liant, si présent, et ensuite convertir les particules de porogène en un gaz et créer un corps vert poreux, puis
d) calcinant le corps vert poreux, sous une atmosphère qui est substantiellement dépourvue d'un gaz contenant du fluor, à une température comprise entre 1 100 °C et 1 400 °C afin de former un corps calciné poreux.

13. Un corps de mullite aciculaire poreux réalisé selon n'importe lesquelles des revendications 1 à 11, ayant une porosité d'au moins 70 pour cent en volume ; une taille de pore moyenne ne dépassant pas 50 microns, et une résistance à la rupture d'au moins 10 MPa.

14. Un excipient de mullite aciculaire poreux de la revendication 13 enduit d'au moins un matériau ou sorbant catalytiquement actif.
